# EUROPEAN PATENT APPLICATION

(11) **EP 2 177 753 A2**
(43) Date of publication of application: **21.04.2010**
(21) Application number: 09172616.6
(22) Date of filing: 09.10.2009
(51) Int. Cl.: F03D 7/00, F03D 11/00

(54) **Wireless information system for wind turbine components**

(30) Priority: 17.10.2008 US 253556
(71) Applicant: General Electric Company, Schenectady, NY 12345 (US)
(72) Inventor: Cheng, Po Wen, 26118BD Delft (NL)
(74) Representative: Bedford, Grant Richard

(57) **Abstract**

A wireless information system for wind turbine components of a wind turbine (100) is disclosed. The wireless information system includes a radio-frequency identification (RFID) tag (200) attached to a wind turbine component. The RFID tag (200) contains component information such as identification, commissioning date, and maintenance information. The system allows the components to be identified and/or verified by a technician. The technician may use a handheld device, which permits the RFID tag to be read at various locations.

## Description

The present disclosure relates generally to wind plant component identification, and more particularly to a method and system for wireless identification of components of wind plants.

Recently, wind turbines have received increased attention as an environmentally safe and relatively inexpensive alternative energy source. With this growing interest, considerable efforts have been made to develop wind turbines that are reliable and efficient.

Generally, a wind turbine includes a plurality of blades coupled to a rotor through a hub. The rotor is mounted within a housing or nacelle, which is positioned on top of a tubular tower or base. Utility grade wind turbines (i.e. wind turbines designed to provide electrical power to a utility grid) can have large rotors (e.g., thirty or more meters in diameter). Blades on these rotors transform wind energy into a rotational torque or force that drives the rotor. The rotor is rotationally coupled to one or more generators or hydraulic systems, which are components in the main power conversion system that converts the mechanical energy into electricity. In the case where the wind turbine uses hydraulic systems for power conversion, the hydraulic system includes oil circuits for driving motors and auxiliary equipment. The wind turbine may also include additional systems such as a gearbox, main bearing, auxiliary power conversion and brake systems that may also include oil circuits for lubrication and cooling.

During service and maintenance of a wind turbine, it is desirable to be able to identify wind turbine components, including major components, in order to perform correct action. The current methods of identifying the components through a bill of materials as well as verifying part serial numbers are very time consuming and may result in wrong information due to mistakes in the bill of materials and operator error.

Furthermore, it may be desirable to reliably associated pertinent information, such as commissioning date, service life, and maintenance instructions with a specific component.

Furthermore, it may be desirable to reliably remotely inventory wind turbine components installed in a particular wind turbine.

Therefore, what is needed is a method and system for electronically tagging wind turbine components that permits an operator to remotely determine specific wind turbine components and associated data.

One object of the present disclosure is to provide an electronic wireless information system and method that permits an operator to remotely obtain specific wind turbine component information and associated data.

According to a first embodiment of the disclosure, a wind turbine is disclosed that includes at least one RFID tag attached to at least one wind turbine component. The at least one RFID tag is configured to provide component information to a RFID reader when interrogated.

According to a second embodiment of the disclosure, a wind turbine component information system is disclosed that includes at least one RFID tag configured to provide component information, and an RFID reader configured to interrogate and receive the component information from the at least one RFID tag.

According to a third embodiment of the disclosure, a method of indentifying components of a wind turbine is disclosed that includes affixing at least one RFID tag to a wind turbine component, and interrogating the at least one RFID tag with an RFID reader to obtain component information.

Further aspects of the method and system are disclosed herein. The features as discussed above, as well as other features and advantages of the present disclosure will be appreciated and understood by those skilled in the art from the following detailed description and drawings, in which:
FIG. 1 shows an illustration of a side view of an exemplary wind turbine.
Fig. 2 is an illustration of an exemplary embodiment of a wind turbine power generation system according having an RFID tag according to the disclosure.
Fig. 3A is a front view of an exemplary embodiment of the RFID tag of Fig. 2.
Fig. 3B is a rear view of an exemplary embodiment of the RFID tag of Fig. 2.

Wherever possible, the same reference numbers will be used throughout the drawings to refer to the same or like parts.

The present disclosure now will be described more fully hereinafter with reference to the accompanying drawings, in which a preferred embodiment of the disclosure is shown. This disclosure may, however, be embodied in many different forms and should not be construed as limited to the embodiments set forth herein; rather, these embodiments are provided so that this disclosure will be thorough and complete and will fully convey the scope of the disclosure to those skilled in the art.

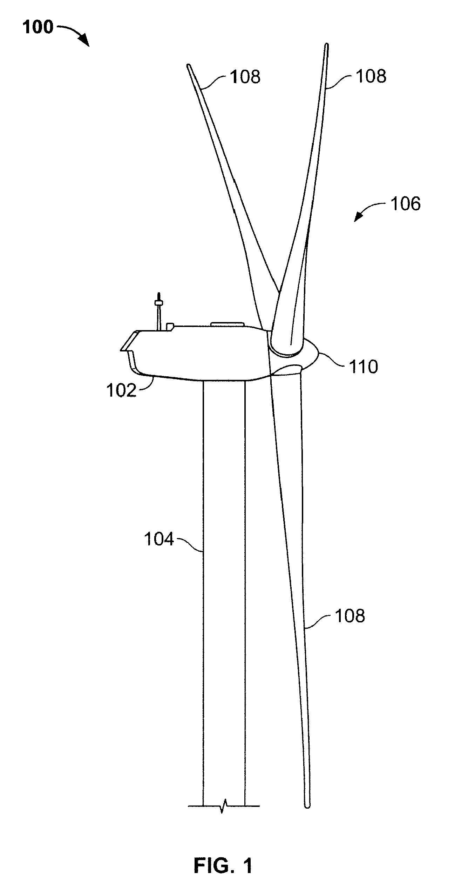

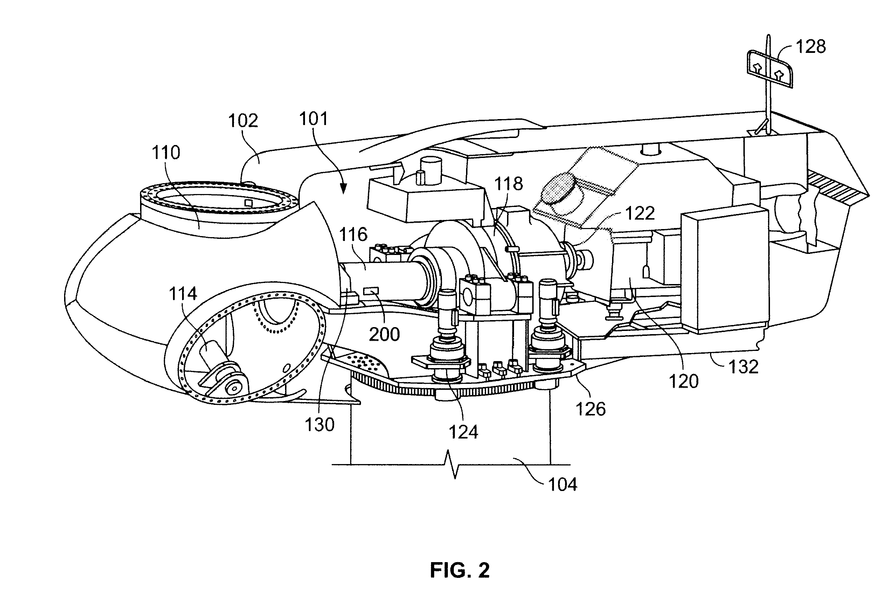

Fig. 1 shows an exemplary wind turbine 100 according to the disclosure. The wind turbine 100 includes a nacelle 102 mounted atop a tower 104 and a rotor 106. The nacelle 102 houses a drivetrain 101 (Fig. 2) for converting wind energy captured by the rotor 106 to electricity. The nacelle 102 may further house other equipment for controlling and operating the wind turbine 100. The rotor 106 includes rotor blades 108 attached to a rotating hub 110. The rotating hub 110 is connected to the wind turbine drivetrain 101 and configured to provide mechanical energy thereto. In this exemplary embodiment, the wind turbine 100 includes three rotor blades 108. In another embodiment, the wind turbine may contain one or more rotor blades 108. The height of the tower 104 is selected on the basis of factors and conditions known in the art, and may extend to heights up to 60 meters or more. The wind turbine 100 may be installed on any terrain providing access to areas having desirable wind conditions. The terrain may vary greatly and may include, but is not limited to, mountainous terrain or offshore locations.

In some configurations and referring to Fig. 2, an exemplary configuration of the wind turbine drivetrain 101 housed in nacelle 102 atop tower 104 is shown. The wind turbine drivetrain 101 includes components including a main rotor shaft 116 (also referred to as a "low speed shaft") connected to rotating hub 110 and supported by a main bearing 130 and, at an opposite end of shaft 116, to a gear box 118. Gear box 118 utilizes a dual path geometry to drive an enclosed high-speed shaft (not shown). The high-speed shaft drives a generator 120 via coupling 122. The generator 120 is mounted on mainframe or generator frame 132. Generator 120 may be of any suitable type, for example, a wound rotor induction generator.

Yaw drive 124 and yaw deck 126 provide a yaw orientation system for wind turbine 100. Anemometry data provides information for the yaw orientation system, including measured instantaneous and time averaged wind direction and wind speed at the wind turbine. Anemometry data may be provided by a wind vane and anemometor 128. In some configurations, the yaw bearing system is mounted on a stationary flange (not shown) provided atop tower 104. The structure that includes the main bearing 130, the yaw deck 126, the generator frame 132, and associated support structure is typically referred to as the "bedplate" or "bedframe".

RFID tagging is a known method of identification in certain arts. In particular, a conventional RFID reader produces and emits a wireless electromagnetic interrogation field at a specific frequency when excited by the interrogation field. The RFID tag typically includes a semiconductor chip having RF circuits, logic, and memory, as well as an antenna. The device functions in response to the coded radio frequency (RF) interrogation field signal. If the device is positioned within the interrogation field for a sufficient time the RFID tag will become stimulated and transmit a uniquely coded signal that is received by the reader or a separate receiving antenna. The RF carrier signal is demodulated to recover information stored in the RFID tag. Various structures, circuits and programming protocols are known in the art. Examples are described in U.S. Pat. Nos. 5,682,143 and 5,444,223, both of which are incorporated herein by reference.

In another known RFID system, a chipless RFID tag (also known as RF fibers) is used. A chipless RFID tag does not make use of any integrated circuit technology to store information. The chipless RFID tag uses fibers or materials that reflect a portion of the reader's signal back and the unique return signal can be used as an identifier.

RFID tags are commercially available and do not per se embody the invention. RFID tags are **characterized in that** they are thin, flat and generally flexible devices that are desirably laminated between outer sheets or layers of the tag so that the electronic features are protected from the ambient environment, more specifically, moisture and/or heat exposure as may be encountered by the components to which they are applied.

Additionally, RFID readers are commercially available and do not per se embody the invention. RFID readers may be permanent or mobile handheld units that emit and RF interrogation signal and receive a return RF signal from an RFID tag. An example of a handheld RFID reader is described in U.S. Pat. No. 7,161,470, which is incorporated herein by reference.

According to the disclosure and as can be seen in Fig. 2, a radio-frequency identification (RFID) tag 200 is disposed on the main rotor shaft 116. The RFID tag 200 may be affixed to the main rotor shaft 116 before or after installation in the nacelle 102. In another embodiment, an RFID tag 200 may be disposed on one or more of the drivetrain components 101, for example, but not limited to the gear box 118 and the main bearing 130. Additionally, an RFID tag 200 may be disposed on other wind turbine components, for example, but not limited to the generator 120, rotating hub 110 and blades 108.

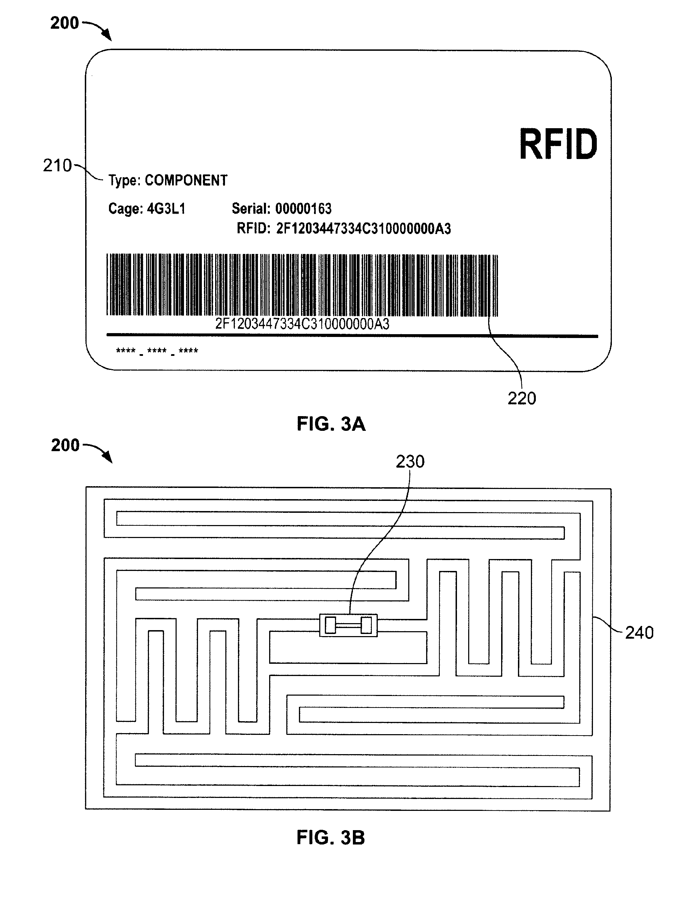

Figs. 3A and 3B illustrate an exemplary RFID tag 200 according to the disclosure. The RFID tag 200 permits the identification and tracking of any component to which the RFID tag 200 is attached. The RFID tag 200 further includes an integrated circuit 230 for storing and processing information, modulating and demodulating a (RF) signal, and other specialized functions. The second is an antenna 240 for receiving and transmitting the signal. In another embodiment, a chipless RFID tag (not shown) allows for discrete identification of tags without an integrated circuit, thereby allowing tags to be printed directly onto assets at a lower cost than traditional tags.

As can be seen in Fig. 3, the RFID tag 200 includes label information 210 and a barcode 220. The RFID tag 200 may further include any human readable or machine readable indicia to facilitate wind turbine operations.

The RFID tag 200 may be part of a wind turbine component information system that includes the RFID tag 200 and an RFID reader. The wind turbine component information system may include additional components including but not limited to transponders and relays to facilitate access between the RFID tag 200 and the RFID reader.

The RFID tag 200 may be read by a portable handheld RFID reader (not shown) by an operator proximate the wind turbine 100 (Fig. 1). In another embodiment, an RFID reader may be permanently installed proximate the wind turbine 100 to access RFID information by an operator.

In one embodiment, the RFID reader interrogates at least one RFID tag 200 to provide service and maintenance information to a service technician. The RFID tag 200 may be preprogrammed with non-variable, preprogrammed information, otherwise known as "read-only" information. In one embodiment, the RFID tag 200 is programmed to provide an indication of presence of the component. In another embodiment, the RFID tag 200 is programmed to provide identification information. In another embodiment, the RFID tag 200 may be programmed to access dynamic information, such as, but not limited to component and/or wind turbine system information, and to provide that information to the RFID reader when interrogated.

In another embodiment, the RFID reader interrogates at least one RFID tag 200 to provide information about the configuration of the turbine for correct planning of spare parts. In yet another embodiment, the RFID reader interrogates at least one RFID tag 200 to provide component information including, but not limited to component identification, commissioning date, service life, and service procedure instructions. In yet a further embodiment, the RFID tag 200 is a chipless RFID tag that provides component identifier information.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A wind turbine, comprising:
   at least one RFID tag attached to at least one wind turbine component; wherein the at least one RFID tag is configured to provide component information
   to a RFID reader when interrogated.
2. The wind turbine of clause 1, wherein the RFID tag is disposed upon a drivetrain component.
3. The wind turbine of any preceding clause, wherein the component information comprises component identification, service and maintenance information.
4. The wind turbine of any preceding clause, wherein the RFID tag comprises a semiconductor chip and antenna.
5. The wind turbine of any preceding clause, wherein the RFID tag is a chipless RFID tag.
6. The wind turbine of any preceding clause, wherein the RFID tag comprises human readable indicia.
7. A wind turbine component information system, comprising:
   at least one RFID tag configured to provide component information ; and
   an RFID reader configured to interrogate and receive the component information from the at least one RFID tag.
8. The system of any preceding clause, further wherein the RFID tag is disposed upon a drivetrain component.
9. The system of any preceding clause, wherein the component information comprises component identification, service and maintenance information.
10. The system of any preceding clause, wherein the RFID tag comprises a semiconductor chip and antenna.
11. The system of any preceding clause, wherein the RFID tag is a chipless RFID tag.
12. The system of any preceding clause, wherein the RFID tag comprises human readable indicia.
13. The system of any preceding clause, wherein the RFID reader is a handheld RFID reader.
14. A method of indentifying components of a wind turbine, comprising:
   affixing at least one RFID tag to a wind turbine component, and
   interrogating the at least one RFID tag with an RFID reader to obtain component information.
15. The method of clause 14, wherein the RFID tag is affixed to a drivetrain component.
16. The method of clause 14 or 15, wherein the component information comprises component identification, service and maintenance information.
17. The method of any of clauses 14 to 16, wherein the RFID tag comprises a semiconductor chip and antenna configured to send component information upon interrogation.
18. The method of any of clauses 14 to 17, wherein the RFID tag is a chipless RFID tag configured to provide component information upon interrogation.
19. The method of any of clauses 14 to 18, further comprising:
   obtaining human readable indicia from the RFID tag.
20. The method of any of clauses 14 to 19, wherein the RFID reader is portably operated.

## Claims

1. A wind turbine (100), comprising:
at least one RFID tag (200) attached to at least one wind turbine component;
wherein the at least one RFID tag (200) is configured to provide component information to a RFID reader when interrogated.

2. The wind turbine (100) of claim 1, wherein the RFID tag (200) is disposed upon a drivetrain component (101).

3. The wind turbine (100) of any preceding claim, wherein the component information is selected from the group comprising component identification, service and maintenance information.

4. The wind turbine (100) of any preceding claim, wherein the RFID tag (200) comprises a semiconductor chip and antenna.

5. The wind turbine (100) of any preceding claim, wherein the RFID tag (200) is a chipless RFID tag.

6. The wind turbine (100) of any preceding claim, wherein the RFID tag (200) comprises human readable indicia.

7. The wind turbine (100) of any preceding claim, further comprising a handheld RFID reader.

8. The wind turbine (100) of any preceding claim, wherein the RFID tag (200) is disposed upon a main rotor shaft (116).

9. The wind turbine (100) of any preceding claim, further comprising a transponder configured to transmit the RFID tag component information.

10. The wind turbine (100) of any preceding claim, wherein the component information comprises component identification.
